(19) Europäisches Patentamt
European Patent Office
Office européen des brevets

(11) EP 2 077 284 B1

(12) **EUROPEAN PATENT SPECIFICATION**

(45) Date of publication and mention of the grant of the patent:
**30.11.2011 Bulletin 2011/48**

(51) Int Cl.:
***C08F 210/16*** *(2006.01)* ***C08F 4/685*** *(2006.01)*
***C08F 2/00*** *(2006.01)* ***C08F 297/08*** *(2006.01)*
***C08J 5/18*** *(2006.01)* ***F16L 9/12*** *(2006.01)*

(21) Application number: **08100162.0**

(22) Date of filing: **07.01.2008**

(54) **Use of an improved solid vanadium-containing Ziegler-Natta catalyst system for producing ethylene polymer compositions in a multistage process**

Verwendung eines verbesserten Festkörper-Vanadium-haltigen Ziegler-Natta-Katalysatorensystems zur Herstellung von Ethylenpolymerzusammensetzungen in einem mehrstufigen Verfahren

Utilisation d'un système de catalyseur Ziegler-Natta contenant du vanadium solide pour la production de compositions polymères d'éthylène dans un procédé à phases multiples

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**08.07.2009 Bulletin 2009/28**

(73) Proprietor: **Borealis Technology Oy**
**06101 Porvoo (FI)**

(72) Inventors:
- **Garoff, Thomas**
  **00840, Helsinki (FI)**
- **Waldvogel, Päivi**
  **06450, Porvoo (FI)**
- **Kallio, Kalle**
  **06400, Porvoo (FI)**

(74) Representative: **Campbell, Neil Boyd**
**Dehns**
**St Bride's House**
**10 Salisbury Square**
**London**
**EC4Y 8JD (GB)**

(56) References cited:
**WO-A-03/106510** **WO-A-2004/055068**
**US-A- 4 154 701** **US-A- 4 368 291**
**US-A- 5 442 018**

EP 2 077 284 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to an improved method for tailoring the properties of ethylene polymer composition by using an improved solid vanadium-containing Ziegler-Natta catalyst system in a multistage process, to ethylene polymer compositions obtainable by the use of this special catalyst system and to articles manufactured therefrom.

Ethylene polymer compositions are used for example in molded articles, such as pipe, containers, cable jackets and insulations, and films and are commonly prepared by multistage processes.

For advanced polymer structures needed in pipe and film applications it is a very crucial feature to control comonomer incorporation in such a way that the comonomer is incorporated just into the right molecular weight polymer. For pipe applications, as an example, it is very harmful if some comonomer is incorporated into the low molecular weight polymer, since this would result in a dramatically decrease of the mechanically strength of the pipe. This is due to the fact that always some crystalline polymer material, containing no comonomers, is needed for maintaining proper pressure resistance of the pipe materials. If there is some low molecular weight polymer present, having branches respectively side chains due to the incorporation of comonomers, this will prevent the polymer to crystallize.

This can happen rather easily in continuously operated multistage processes, comprising for example a first stage polymerization in a slurry reactor producing the low molecular weight polymer and at least a second stage polymerization in a gas phase reactor, with conventional titanium based Ziegler-Natta catalyst systems present in the second stage of the multistage process, where the intention is to make high molecular weight polymer with some controlled amount of comonomer. Since most Ziegler-Natta catalysts have several different actives sites, it often happens that also low molecular weight polymer chains containing remarkable amounts of side chains originating from the comonomer used are formed in this second step, if some catalyst is just entering directly from the slurry reactor into the gas phase reactor according to normal rules of residence time distribution.

Furthermore typically titanium based Ziegler-Natta catalyst systems produce very broad composition distributions leading to this kind of polymers having low molecular weight but still too much comonomer for pipe applications.

Similar inhomogenity problems when producing linear low density polyethylene (LLDPE) can cause decrease of mechanical properties of film materials, as well as taste and odour problems with low molecular weight waxy polymer / oligomer fractions.

To solve these previously identified problems metallocene catalysts have been used, which have a very narrow molecular weight distribution, very controlled active site structure and copolymerize comonomers only into the higher molecular weight part, leading to very narrow composition distributions in slurry and gas phase conditions, minimizing the effect of improper low density low molecular weight polymers. However with conventional $TiCl_4$ based Ziegler-Natta (ZN) catalysts this is not possible in enough good extend.

It is known in the art that conventional ZN-catalysts tend to produce ethylene polymers having a broad MWD and that hence multimodal (e.g. bimodal) are produced by using ZN-catalysts where both the lower and the higher molecular weight components tend to have broad MWD. In particular the HMW component tends to have significant lower molecular weight tails which have deleterious affects on the mechanical properties of the polymer and on the articles made from the polymer. For example, films produced with a polymer prepared using a conventional ZN catalyst tend to have poor dart drop values and pipes made therefrom often exhibit weak pressure test results.

Several multistage processes using different ZN-catalysts have been described in the literature.

For example WO 2006/014475 describes a process for producing an ethylene polymer composition in a multistage process, wherein in the first stage ethylene is polymerized alone or with a comonomer to produce ethylene polymer, transferring the polymer produced in the first stage into a second stage, in which ethylene is polymerized alone or with a comonomer, in the presence of the polymer produced in the first stage. The first stage is a slurry polymerization stage and the polymerization is carried out in the presence of a catalyst system comprising:

a) a solid catalyst precursor, comprising a transition metal selected from titanium and vanadium; magnesium; a halide; optionally an electron donor; and a solid particulate material comprising an inorganic oxide, wherein the median particle diameter of the solid precursor, $D_{50}$, is from 1 to 13 micrometers; and
b) an organoaluminium compound.

By using this catalyst system the gel levels in ethylene polymer compositions produced in a multistage process, wherein the first stage is carried out in a slurry reactor, should be reduced. Preferably the second stage is also a slurry polymerization.

The preferred catalyst precursor used according to WO 2006/014475 has the formula $Mg_aTi(OR)_bX_c(ED)_d$ wherein R is an aliphatic or aromatic hydrocarbon radical having 1 to 14 carbon atoms or COR', wherein R' is an aliphatic or aromatic hydrocarbon radical having 1 to 14 carbon atoms; each OR group is the same or different; each X is independently Cl, Br or iodine; ED is an electron donor; a is 0.5 to 56; b is 0, 1 or 2; c is 2 to 116 and d is less than or equal to 1.5a + 4.

However WO 2006/014475 does not suggest the possibility of tailoring the properties of a multimodal ethylene polymer by using special ZN-catalysts.

WO 2007/051607 describes the use of a modified ZN-catalyst system for tailoring the properties of a multimodal ethylene polymer to influence the molecular weight distribution (MWD) of a higher molecular weight (HMW) component whilst essentially having no effect on the MWD of the lower molecular weight (LMW) component.

The multimodal (e.g. bimodal) ethylene polymers having a LMW component and a HMW component are produced by polymerizing ethylene and optionally at least one further alpha olefin in at least two stages, wherein at least one stage is carried out in a slurry in the presence of a Ziegler-Natta catalyst comprising an electron donor that is an ether.

The resulting ethylene polymer produced according to WO 2007/051607 in a full scale two stage polymerization process preferably has a $MFR_2$ of 10 to 1000 g/10min measured according to ISO 1133 at 190°C and under 2.16 kg load and can be used for the manufacture of films and pipe.

From EP 0993 478 it is known that with using a metallocene catalyst in a multi-stage process a costly hydrogen removal step between the polymerization steps can be avoided since, unlike with a Ziegler-Natta catalyzed process, hydrogen is substantially entirely consumed in the early (high $MFR_2$ producing) stage. Without such hydrogen consumption, hydrogen removal is required in order to allow the desired HMW component (lower $MFR_2$) to be achieved in the later polymerization step.

EP 0 991 676 describes the use of a special metallocene type catalyst material which is characterized in that a co-catalyst or catalyst activator and the catalyst material are loaded onto a support simultaneously and said catalyst material comprises at least two η-liganded catalysts comprising a metal selected from Ti, Zr or Hf and at least two different types of active polymerization sites for multi-stage polymerizations. Such a catalysts is for example prepared by using (n-butylcyclopentadienyl)$_2$ZrCl$_2$, (SiMe$_2$(2-Me, 2-methyl-4-phenyl-indenyl)$_2$ZrCl$_2$ in racemic form and methylaluminoxane as described in Example 1. According to EP 0 991 676 the use of this special catalyst material allows the user to tailor the placement of comonomer into the higher molecular weight component of the polymer and also to tailor the molecular weight profile of the higher molecular weight component of the polymer. The resulting polymers have an extremely high FRR21/2 (i.e. the ratio of $MFR_{21}$ to $MFR_2$) of at least 160 and more preferably between 200 and 450.

None of these literatures suggests the possibility of using a vanadium-containing Ziegler-Natta catalyst system in a multistage process which enables to control the comonomer incorporation and which is also active in the presence of hydrogen, allowing the desired HMW component (lower $MFR_2$) to be achieved in the later polymerization step.

Therefore there is still a need for methods which provide multimodal, especially bimodal, ethylene polymers (preferably copolymers) with controllable molecular weight distribution as well as comonomer incorporation even when hydrogen is used. In particular methods which produce multimodal polymers having a higher molecular weight component without a significant lower molecular weight tail are desired.

Thus viewed from a first aspect the invention provides an improved method for tailoring the molecular weight distribution and comonomer incorporation of a multimodal (e.g. bimodal) ethylene polymer having a lower molecular weight component and a higher molecular weight component comprising polymerizing ethylene and at least one further alpha-olefin in at least two stages, wherein at least one stage is carried out in a slurry phase in the presence of an improved solid Ziegler-Natta catalyst system, said catalyst system comprising

1) a solid procatalyst formed by contacting at least:

a) a Mg-alcoholate complex of the formula (I):

$Mg(OR_1)_{2-n}(R_1)_n$, wherein each $R_1$ independently represents a $C_1$-$C_{20}$ hydrocarbyl group; $0 \leq n < 2$ and may or may not be an integer; the sum of (2-n), and n is 2

b) an aluminium compound of the formula (II)
$Al(R_2)_mX_{3-m}$, wherein each $R_2$ independently represents an alkyl of up to 6 carbon atoms; each X is independently a halogen; $0 \leq m < 3$ and m and may or may not be an integer
c) a vanadium compound and a titanium compound in portions such as to provide a molar ratio of V:Ti from 99: 1 to 1:99 and
d) optionally one or more organic ligand compound(s) which is/are selected from organic compounds comprising a cyclopentadienyl anion backbone,
in order to yield the solid procatalyst and

2) one or more organometallic cocatalyst(s) of the formula (III)

$$\begin{array}{c}(RO)_z \\ | \\ R_y\text{-}Al\text{-}Cl_x\end{array}$$

wherein each R is independently a $C_1$-$C_{20}$-alkyl group, $0 \leq x \leq 2$; $1 \leq y \leq 3$; $0 \leq z \leq 2$ and $x + y + z = 3$, x, y and z may or may not be an integer.

In preferred methods of the present invention at least one stage is carried out in the gas phase.

Viewed from a further aspect the invention provides a method for preparing a bimodal ethylene polymer comprising:

a) in a first slurry phase stage, polymerizing ethylene and optionally at least one further alpha-olefin with the above described improved solid Ziegler-Natta catalyst system and

b) in a second gas or slurry phase stage, preferably gas phase stage, polymerizing ethylene and at least one further alpha olefin in the presence of the same catalysts system.

Viewed from a further aspect the invention provides polymers obtainable by the method as herein described. Preferably these polymers are bimodal ethylene copolymers and more preferably these polymers are bimodal LLDPE polymers.

Viewed from a yet further aspect the invention provides use of the polymers as hereinbefore described for the manufacture of articles, especially of films or pipes.

The term "tailoring the molecular weight distribution and comonomer incorporation" implies the ability to adjust the MWD to a predetermined desired value.

This is possible by using the special above described improved solid Ziegler-Natta catalyst system, wherein in the first or earlier slurry polymerization step with high $H_2$ content the Ti-center is the mainly active site producing the lower molecular weight component with less or no comonomer and when the catalyst system enters the second or subsequent polymerization step, which can be a slurry or gas phase step and preferably is a gas phase step, the V-center is taking over the main responsibility for producing the high molecular weight copolymer.

As used herein the term "multimodal" is intended to cover polymers having at least two differently centred maxima along the x-axis of their molecular weight distribution curve as determined by gel permeation chromatography. In such a curve d(log(MW)) is plotted as ordinate against log (MW), where MW is molecular weight. In a preferred embodiment of the present invention, the polymer (e.g. copolymer) is bimodal.

The terms higher and lower molecular weight components are used herein to indicate that one component of the polymer has a higher molecular weight than the other component. The HMW component has a higher molecular weight than the LMW component, i.e. the terms HMW and LMW are relative.

The higher molecular weight component of polymers produced according to the invention, preferably has a weight average molecular weight of 100 000 to 900 000 and a comonomer content from 3 - 30 wt%.

The lower molecular weight component of polymers produced according to the invention, preferably has a weight average molecular weight of 5 000 to 50 000 and no or low comonomer content from 0 to 8 wt%.

The term "copolymer" as used herein is intended to encompass polymers comprising repeat units from two or more monomers. In typical ethylene copolymers, ethylene forms the largest monomer present. The desired amount of comonomer depends on the desired properties of the polymer. Typical amounts of comonomers in a polymer produced in a two stage slurry-gas phase or slurry-slurry polymerization according to the invention is about 1-25 % by weight, preferably 5 to 25 % by weight, of the final polymer.

In contrast the term "homopolymer" as used herein is intended to encompass polymers which consist essentially of repeat units deriving from a single monomer. Homopolymers may, for example, comprise at least 99 %, preferably at least 99.5 %, more preferably at least 99.9 % by weight of repeat units deriving from a single monomer.

In order to be able to tailor the molecular weight distribution and comonomer incorporation an improved solid vanadium-containing Ziegler-Natta catalyst system is used for the multi-stage polymerization.

This improved solid Ziegler-Natta catalyst system comprises:

1) a solid procatalyst formed by contacting at least:

a) a Mg-alcoholate complex of the formula (I):

$Mg(OR_1)_{2-n}(R_1)_n$, wherein each $R_1$ independently represents a $C_1$-$C_{20}$ hydrocarbyl group; $0 \leq n < 2$ and

may or may not be an integer; the sum of (2-n), and n is 2

b) an aluminium compound of the formula (II)
$Al(R_2)_mX_{3-m}$, wherein each $R_2$ independently represents an alkyl of up to 6 carbon atoms; each X is independently a halogen; $0 \leq m < 3$ and m and may or may not be an integer
c) a vanadium compound and a titanium compound in portions such as to provide a molar ratio of V:Ti from 99:1 to 1:99 and
d) optionally one or more organic ligand compound(s) which is/are selected from organic compounds comprising a cyclopentadienyl anion backbone,

in order to yield the solid procatalyst and
2) one or more organometallic cocatalyst(s) of the formula (III)

$$\begin{array}{c}(RO)_z \\ | \\ R_y\text{-}Al\text{-}Cl_x\end{array}$$

wherein each R is independently a $C_1$-$C_{20}$-alkyl group, $0 \leq x \leq 2$; $1 \leq y \leq 3$; $0 \leq z \leq 2$ and $x + y + z = 3$, x, y and z may or may not be an integer.

As stated above, solid procatalysts are formed by contacting at least a) a Mg-alcoholate complex of the formula (I), b) an aluminium compound of the formula (II), c) a vanadium compound and a titanium compound and d) optionally one or more ligand compound(s).

For forming the solid procatalyst, there are two possible ways of contacting components a), b), c) and optionally d):

Method 1) by preparing the special $MgCl_2$-carrier consisting of $MgCl_2$/Et-Al-(O-R)$_2$ as support as described in WO2004/055068 or
Method 2) by using the special emulsion/solidification method for preparing the catalyst as described in WO 03/106510.

<u>Method 1:</u>

According to Method 1 the solid procatalyst is prepared by contacting

[A] a solid magnesium aluminium complex containing magnesium, halogen and aluminium
[B] with a vanadium compound and a titanium compound in portions such as to provide a molar ratio of V:Ti from 99:1 to 1:99 and
[C] optionally with one or more organic ligand compound(s) which is/are selected from organic compounds comprising a cyclopentadienyl anion backbone

First the solid magnesium aluminium complex (= catalyst support) containing magnesium, halogen and aluminium is described below:

Said complex is obtained by

(a1) adding a solution of a magnesium compound of the formula (I):

$Mg(OR_1)_{2-n}(R_1)_n$, wherein each $R_1$ independently represents a $C_1$-$C_{20}$ hydrocarbyl group; $0 \leq n < 2$ and may or may not be an integer; the sum of (2-n), and n is 2;
to a solution of a compound of formula (II): $Al(R_2)_mX_{3-m}$, wherein each $R_2$ independently represents an alkyl of up to 6 carbon atoms; X is independently a halogen; $0 \leq m < 3$ and m and may or may not be an integer

(a2) separating the solidified reaction product from the reaction mixture and washing the product with a wash solution until a molar ratio of aluminium to magnesium has a value of at least 0.3

Such complexes are known, for example from WO 2004/055068. Their preparation is done as described in WO 2004/055068.

Accordingly, the catalyst support prepared according to Method 1 comprises a reaction product formed at least from:

1) Compound (1): A magnesium hydrocarbyloxy compound of a general formula (I):

$$Mg(OR_1)_{2-n}(R_1)_n,$$

wherein each $R_1$ is independently a $C_{1-20}$ hydrocarbyl group, e.g. a $C_{2-15}$ group, preferably a $C_{3-10}$ group, such as a $C_{4-10}$ group, suitably a $C_{4-10}$ group e.g. an alkyl, cycloalkyl, alkylcycloalkyl, cycloalkylalkyl, aryl, arylalkyl, or alkylaryl, wherein "alkyl" used as alone or as part of another option can be linear or branched and "aryl" is preferably of 5-12 carbon ring atoms, suitably phenyl or naphthyl; e.g. each $R_1$ is independently an ethyl, propyl, butyl, pentyl, hexyl, heptyl, octyl; $0 \leq n < 2$ and n may or may not be an integer; and the sum of (2-n), and n is 2.

In a preferred embodiment of the invention, a magnesium hydrocarbyloxy compound of formula $Mg(OR_1)_{2-n}(R_1)_n$ (I), wherein each $R_1$ are independently as defined above; and $0 \leq n < 2$, is used, which may be commercially available or, preferably, is a reaction mixture of a magnesium alkyl compound of formula $Mg(R_1)_2$ (III), wherein each $R_1$ independently is as defined above, with an alcohol $R_1OH$, wherein $R_1$ is as defined above;

and

2) Compound (2): A halogen-containing compound of formula (II):

$$Al(R2)_mX_{3-m},$$

wherein each $R_2$ independently represents an alkyl of up to 6 carbon atoms, preferably up to 4 carbon atoms; and each X is independently a halogen, preferably a chlorine; $0 \leq m < 3$ and m may or may not be an integer; e.g. dialkyl aluminium chlorides, such as dimethyl aluminium chloride, diethyl aluminium chloride, diisobutyl aluminium chloride, or alkyl aluminium dichlorides, such as ethyl aluminium dichloride (EADC) or methyl aluminium dichloride;

Preferably, the support consists of the reaction product of compound (1), optionally prepared from compound (IV) and $R_1OH$ as defined above, and of compound (2).

A solution of the compound(s) (1) is added to the solution of compound(s) (2) to cause the solidification (precipitation) of the solid reaction product. A slowly addition under mixing is preferred. By slowly addition it is meant herein that the solution (1) is added gradually, e.g. drop wise or other similar means, to cause a uniform solidification reaction as known in the art.

A solution (1) containing a magnesium hydrocarbyloxy compound of formula $Mg(OR_1)_{2-n}(R_1)_n$ (I), wherein $R_1$ is as defined above; and $0 \leq n < 2$, is prepared first:

by contacting, in a hydrocarbon solvent (e.g. heptane), a compound of formula $Mg(R_1)_2$ (IV), wherein $R_1$ is as defined above under formula (I), e.g. each $R_1$ is independently methyl, ethyl, propyl, butyl, pentyl, hexyl, heptyl or octyl, e.g. di(n-butyl) magnesium, n-butyl sec-butyl magnesium, butyl ethyl magnesium or butyl octyl magnesium, preferably butyl octyl magnesium (BOMAG);

with an alcohol of formula $R_1OH$, wherein $R_1$ is as defined above under formula (I), suitably a cycloalkyl, cycloalkylalkyl, aryl, alkylaryl, arylalkyl or alkyl, each containing from 2 to 15, preferably from 3 to 10 carbon atoms. Preferably $R_1$ is a $C_{3-15}$ cycloalkyl or branched or unbranched $C_{3-15}$ alkyl, preferably a $C_{4-10}$ cycloalkyl or a branched or unbranched $C_{4-10}$ alkyl, such as cyclopentanol, 2-methyl-2-propanol, 2-ethyl-1-butanol, 2-methyl-1-pentanol, 2-ethyl-pentanol, 2-ethyl-1-hexanol, n-heptanol, n-octanol and decanol, preferably 2-ethyl-1-hexanol. The alcohols which are usable to transform the magnesium hydrocarbyl to a magnesium hydrocarbyloxy complex soluble in a hydrocarbon solvent, are known in the art or can be readily determined by a skilled person. Said contact is effected in a temperature between 0 and 100 °C, preferably at 10 to 40 °C, e.g. at 20 to 30 °C. The reaction can be completed by heating the system at 50 to 100 °C for 10 to 100 min. Preferably the alcohol is added to the Mg solution. The molar ratio of Mg dihydrocarbyl to $R_1OH$ ($Mg:R_1OH$) is preferably from 1:1 to 1:4, more preferably 1:1 to 1:3.5, e.g. 1:1.5 to 1:3.5, especially 1:1.8 to 1:3.1.

The solution (2) of the halogen-containing compound is prepared by dissolving in a hydrocarbon solvent as defined above (e.g. toluene) a compound of formula

$$Al(R_2)_mX_{3-m} \qquad (II),$$

wherein each $R_2$ is independently as defined above, preferably an alkyl of up to 6, such as up to 4, carbon atoms; and each X is independently a halogen, such as chlorine; and x may of may not be an integer $0 \leq m < 3$; e.g. dimethyl aluminium chloride, diethyl aluminium chloride, diisobutyl aluminium chloride, ethyl aluminium dichloride and methyl aluminium dichloride, preferably ethyl aluminium dichloride (EADC). Such solutions may also be commercially available, whereby they may be further diluted, if desired, with a solvent as defined above.

The prepared reaction mixture (1), i.e. Mg-hydrocarbyloxy-containing solution (1), is then added slowly to the obtained Al solution (2).

It has been found that in order to achieve beneficial properties of the support material, the obtained solid reaction product should be recovered from the reaction mixture of solution (1) and (2) before the use as a support.

The recovery step can be effected in various ways including the separation of the solid reaction product from the liquid reaction medium, e.g. by filtration, decantation or suction, and washing the solid product with a wash solution e.g. in a manner known in the art, before it is used as a support material.

It is evident for a skilled person that the washing efficiency can be varied within the scope of the invention depending on the desired washing effect and can be controlled e.g. by the number of the washing steps, the temperature, the solvent(s) used for washing, the amount of the wash solution and the washing time. The wash temperature can be e.g. 0 to 100 °C, suitably 20 to 100 °C, e.g. 40 to 80 °C, such as 55 - 70 °C. Thus the duration of a washing (e.g. the mixing time of the slurry in a wash solution) depends on the desired effect and can be chosen accordingly. The washing effect depends on the separation efficiency of the solid material from the solution.

Solutions of the Starting Compounds

The term "solution" is understood herein broadly to include solutions prepared from (a) one or more of the support forming compounds in liquid form (liquid at the room temperature or a melt prepared at a higher temperature) and/or (b) from an organic solvent(s).

The solutions are suitably formed using an organic solvent that dissolves the compounds. Preferred solvents include inert hydrocarbons, e.g. linear or branched aliphatic, alicyclic or aromatic $C_{5-20}$ hydrocarbons, preferably $C_{6-12}$ hydrocarbons, wherein the ring systems may contain hydrocarbon, e.g. $C_{1-6}$ alkyl substituents, such as cyclohexane, hexane, heptane, octane or toluene, or any mixtures thereof. E.g. linear or branched alkanes, e.g. hexane, heptane or octane, may be used.

Wash Solution

As the wash solution, e.g. any organic solvent or mixtures thereof known in the art can be used. Preferable solvents include hydrocarbons as defined above, e.g. pentane, hexane or heptane, particularly heptane.

Further treatment steps of the solid reaction product may also be possible after the combination of solutions (1) and (2) (i.e. after the precipitation reaction) before or during the recovery step of the invention. Such treatment includes e.g. a heating step of the reaction mixture after the solidification at an elevated temperature, e.g. up to 100 °C, such as 40 to 80 °C, suitably 50 to 75 °C, for a suitable period of time, such as from 5 minutes to 24 hours, e.g. 10 to 720 minutes, such as 20 to 360 minutes, before the recovery step.

In a preferable embodiment, the molar ratio of aluminium to magnesium in the catalyst support material of the invention is at least 0.3 ($\geq 0.3$). Preferably the molar ratio of aluminium to magnesium is at least 0.4 ($\geq 0.4$), or preferably at least 0.5 ($\geq 0.5$), or at least of 0.6 ($\geq 0.6$). Said ratios result in a catalyst with very good morphology and reduced amount of fines content of the produced polymer product. In a further embodiment of the invention said molar ratio may be even at least 0.7 ($\geq 0.7$) or 0.80 ($\geq 0.80$), such as 0.85 ($\geq 0.85$), depending on the properties desired for the catalyst. In principle, the upper limit of said ratio range is not limited, but may be e.g. 1.1. In one preferred embodiment said upper limit of said molar ratio is 0.99. The above-said molar ratio can be determined in a known manner, e.g. using flame atomic absorption method with e.g. a nitrous oxide/acetylene flame.

The molar ratio of aluminium to magnesium in the support material is adjusted to a desired range by means of the recovery step of the invention, i.e. by separating the solids from the liquid reaction medium and by washing the solids as described above.

Particularly, the obtained solid reaction product is washed with a wash solution, and the washing procedure can be repeated, if needed, until the desired ratio is obtained. The ratio can be monitored between the washings, if needed, e.g. by analysing the support samples in a conventional manner the relevant contents of the reaction product or the reaction medium, e.g. the mol-% of Mg and the mol-% of Al in the formed carrier material.

After the recovery step of the invention, the solid reaction product can be used as a support material for further catalytically active compounds, such as vanadium and optionally titanium to form a final polymerization catalyst component, such as the solid ZN-procatalyst of the invention.

Accordingly, in the method for preparing the solid Ziegler-Natta procatalyst of the invention, the catalyst support, prepared according to the present Method 1, is suspended in an organic solvent and treated at least with one transition metal compound, i.e. a vanadium compound and a titanium compound. The treatment step is preferably effected in a manner known in the art.

The vanadium compound employed for the preparation of the procatalyst is soluble in the liquid hydrocarbon and is, in general, a compound in which the vanadium has its maximum valency, that is to say valency 4, or else those in which the vanadyl group VO has its maximum valency, that is to say valency 3. The vanadium compound employed may be a compound which has either of the two general formulae $V(OR)_{4-m}X_m$ or $VO(OR)_{3-n}X_n$ in which formulae R denotes an alkyl group containing from 1 to 12 carbon atoms, X a halogen atom, such as bromine or chlorine, m an integral or fractional number ranging from 0 to 4 and n an integral of fractional number ranging from 0 to 3. Advantageously, one or more compounds can be employed, chosen from vanadium tetrachloride, vanadyl trichloride, vanadyl tri-n-propoxide, vanadyl triisopropoxide and vanadium tetra-n-propoxid.

Preferably vanadium tetrachloride is used.

The titanium compound employed for the preparation of the procatalyst is also soluble in the liquid hydrocarbon and is, in general, a compound in which the titanium has its maximum valency, that is to say valency 4. The titanium compound employed may be a compound of the general formula $Ti(OR)_{4-p}X_p$ in which formula R denotes an alkyl group containing from 1 to 12 carbon atoms, X a halogen atom, such as bromine or chlorine, and p an integral or fractional number ranging from 0 to 4. Among these compounds, titanium tetrachloride or titanium tetraisopropoxide can be employed

Preferably titanium tetrachloride is used.

The quantity of vanadium and titanium compound which are employed to prepare the procatalyst is in particular such that the molar ratio of V:Ti is from 99:1 to 1:99, preferably to 10:90, more preferably to 15:85 and most preferably to 20:80.

It is also possible to choose more narrow ranges, as for example that the molar ratio of V:Ti is from 60:40 to 40:60.

The molar ratio to be chosen depends on the desired properties of the polymer produced.

Generally, in the final solid procatalyst particles, the molar ratio of Mg:(V/Ti) can be e.g. between 10:1 to 1:10, preferably less than 6:1, such as between less than 6:1 and 1:1.

The molar ratio of (V/Ti):Al can be e.g. between 10:1 to 1:2, e.g. 5:1 to 1:1. The ratios can be determined in a manner known in the art.

Optionally the procatalyst can also contain one or more organic ligand compound(s) which is/are selected from organic compounds comprising a cyclopentadienyl anion backbone.

The ligand compound d) may be added at any stage in the preparation of the catalyst before the final recovery of the catalyst.

The organic ligand d) of the procatalyst of the invention, which may be added optionally, originates from a compound having an organic ligand anion. The cationic part is preferably a metal, i.e. the compounds preferably are metal salts of organic anions. The metals preferably are metals of Group 1 or 2, preferably Mg and Li metals, i.e. the compounds to be used in ligand modifying of the catalysts are preferably Li or Mg salts of organic ligand anions.

The organic ligand anion comprises a cyclopentadienyl hydrocarbon backbone, which may contain heteroatoms such as N, P, O, S etc.

Said cyclopentadienyl hydrocarbon backbone can be a part of a fused hydrocarbon ring system. As examples for that type of ring systems can mentioned e.g. pentalenyl, indenyl, atsulenyl, indasenyl, asenaphtylenyl or fluorenyl compounds. All hydrocarbons backbones can be in substituted or unsubstituted form.

For example, the organic ligand anion may be a substituted or unsubstituted cyclopentadienyl, a substituted or unsubstituted indenyl or a substituted or unsubstituted fluorenyl compound.

The optional one or more substituent(s), are independently selected preferably from halogen, hydrocarbyl, e.g. $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl or $C_7$-$C_{20}$-arylalkyl, $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, $-SiR''_3$, $- OSiR''_3$, $-SR''$, $-PR''_2$ or $-NR''_2$, each R" is independently a hydrogen or hydrocarbyl, e.g. $C_1$-$C_{20}$-alkyl, $C_2$-$C_{20}$-alkenyl, $C_2$-$C_{20}$-alkynyl, $C_3$-$C_{12}$-cycloalkyl or $C_6$-$C_{20}$-aryl; or e.g. in case of $-NR''_2$, the two substituents R" can form a ring, e.g. five- or six-membered ring, together with the nitrogen atom wherein they are attached to.

Examples of the organic ligand anions comprise cyclopolyenyls or substituted cyclopolyenyls having 5 to 24 carbon atoms such as cyclopentadienyl, methylcyclopentadienyl, ethyl-cyclopentadienyl, t-butyl-cyclopentadienyl, hexyl-cyclopentadienyl, octyl-cyclopentadienyl, 1,2-dimethyl-cyclopentadienyl, 1,3-dimethyl-cyclopentadienyl, 1,2,4-trimethyl-cyclopentadienyl, 1,2,3,4-tetramethylcyclopentadienyl, pentamethyl-cyclopentadienyl, indenyl, 4-methyl-1-indenyl, 4,7-dimethyl-indenyl, 4,5,6,7 -tetrahydro-indenyl, fluorenyl or methylfluorenyl, 2,3-dimethyl-dimethyl-t-butyl-siloxycyclopentadienyl.

The final procatalyst, e.g. the ZN procatalyst, thus obtained is combined with further catalyst component(s) conventionally used in the art, such as a cocatalyst (e.g. aluminium alkyl compounds) and optionally (internal) electron

donors, additional activators and/or modifiers. Said further catalyst component(s) can be combined with the present procatalyst during the preparation method of the present procatalyst or during the actual polymerization step by adding the procatalyst of the invention and the further component(s) separately into a reactor.

Preferably no internal electron donor is added.

Method 2:

According to Method 2 the solid procatalyst is prepared by using the special emulsion/solidification method as described in WO 03/106510.

According to Method 2 the solid procatalyst is formed by contacting at least

a) a Mg-alcoholate complex of the formula (I)
b) an aluminium compound of the formula (II)
c) a vanadium compound and optionally a titanium compound in portions such as to provide a molar ratio of V:Ti from 99:1 to 1:99 and
d) optionally with one or more organic ligand compound(s) which is/are selected from organic compounds comprising a cyclopentadienyl anion backbone;

the method comprising

- Preparing a common solution of a), b) and c) or separate solutions comprising one or more of compounds a), b) and c)
- dispersing said solution(s) in a solvent immiscible therewith and inert in relation to said compounds, to obtain an emulsion in which said solution(s) form(s) the dispersed phase in the form of droplets comprising compounds (a), (b) and (c),
- solidifying the catalyst compounds in the dispersed droplets and
- optionally adding one or more ligand compound(s) d) which is/are selected from organic compounds comprising a cyclopentadienyl anion backbone at any stage of the preparation into the dispersed phase before or after the solidification step.

Optionally, the obtained solidified catalyst compounds particles may be recovered.

The solidified catalyst particles (= procatalyst) can be washed before the final recovery.

In the formation of the procatalyst of the Ziegler-Natta catalyst system of the invention compound d) may be added at any stage of the procatalyst preparation, however, before said optional final recovery step.

The magnesium hydrocarbyloxy compound a) of formula $Mg(OR_1)_{2-n}(R_1)_n$ (I), wherein $R_1$ is as defined above; and $0 \leq n < 2$, is prepared first, as described for Method 1, by contacting, in a hydrocarbon solvent (e.g. heptane), a compound of formula $Mg(R_1)_2$ (IV) with an alcohol of formula $R_1OH$. The molar ratio of Mg dihydrocarbyl to $R_1OH$ (Mg: $R_1OH$) is preferably from 1:1 to 1:4, more preferably 1:1 to 1:3.5, e.g. 1:1.5 to 1:3.5, especially 1:1.8 to 1:3.1.

The aluminium compound b) of the formula (II) is defined as described above, having the formula $Al(R_2)_mX_{3-m}$, wherein each $R_2$ independently represents an alkyl of up to 6 carbon atoms; X is independently a halogen; $0 \leq m < 3$ and m and may or may not be an integer.

The Vanadium compound and the Titanium compound are also defined as described above for Method 1. Preferably $VCl_4$ and $TiCl_4$ are used.

The organic ligand d) of the procatalyst of the invention, which may be added optionally, is also defined as described above for Method 1.

In the method for forming the catalyst component, the compounds a), b), c) and d), may be combined into one solution which is dispersed in the immiscible solvent, or, alternatively, at least two separate solutions for each or part of said compounds may be prepared, which are then dispersed successively to the immiscible solvent.

The ligand compound d) may be added at any stage in the preparation of the catalyst before the final recovery of the catalyst. The ligand compound may be mixed together with the solutions of compounds a), b) or c) and then dispersed in the immiscible solvent, or as stated above, it can be added during or after the solidification step, e.g. during the washing step before the final recovery.

The term "a solvent immiscible therewith and inert in relation to said compounds" means herein that said solvent forming the continuous phase is chemically inert. Preferably, the solvent of said continuous phase does not contain dissolved therein any significant amounts of catalyst forming compounds a), b), c) or d). Thus, the solid particles of the procatalyst are formed in the droplets from the compounds which originate from the dispersed phase (i.e. are provided

to the emulsion in a solution dispersed into the continuous phase).

The term "emulsion" used herein covers both bi- and multiphasic systems.

As stated above, before the final recovery step the solid catalyst particles may be washed. The washed solid particles can be isolated and dried in a manner known in the art to obtain said procatalyst as dried particulate solids. Another alternative is to slurry the solid procatalyst particles after washing into an oily liquid to get a catalyst-oil-slurry, which can be used as such in polymerization. By this method the drying step can be avoided. Drying step can in some cases have undesired effects on the catalyst morphology. The oily liquid comprises oil, petroleum or hydrocarbons or mixtures thereof, preferably hydrocarbon oils, such as white oils, which are mixtures of paraffinic and naphtenic hydrocarbons.

The solution to be dispersed into the immiscible solvent can be any solution prepared from the catalyst component(s) forming compounds, provided that it is in a form of a liquid when dispersed into the continuous phase. Said term "solution" is understood herein broadly to include solutions prepared from (i) one or more catalyst forming compound in liquid form, (ii) from a second inert solvent, and/or (iii) a melt of said compound(s); as described herein below.

In case of a second inert solvent, any suitable solvent which dissolves said compounds may be used, preferably an organic solvent including linear or branched aliphatic, alicyclic and aromatic hydrocarbons, suitably an aliphatic or aromatic hydrocarbon, e.g. pentane, hexane, heptane, toluene, benzene etc, preferably aromatic hydrocarbon, most preferably toluene. A mixture of second solvents may also be used, provided that said mixture dissolves the compounds and is immiscible with the continuous phase at least during the emulsion formation step.

The solvent used to form the continuous phase is chosen, as stated above, to be inert, and also immiscible with the solution to be dispersed at least at the conditions (e.g. temperature) used during the dispersing step. Said first solvent may also be a mixture of one or more solvents. Furthermore, the solvent is chosen so that the compounds and possible intermediate(s) thereof which form the solidifying catalyst component(s), as well as the solidified procatalyst, are practically insoluble or only poorly soluble to the continuous phase.

In a preferred embodiment said solvent forming the continuous phase is an inert solvent including halogenated organic solvents, preferably fluorinated organic solvents and particularly semi, highly or perfluorinated organic solvents and functionalised derivatives thereof, which means that said solvents may contain other functional groups and/or further halogens such as chlorine, bromine and/or iodine. Examples of the above-mentioned solvents are semi, highly or perfluorinated hydrocarbons, such as alkanes, alkenes and cycloalkanes, ethers, e.g. perfluorinated ethers and amines, particularly tertiary amines, and functionalised derivatives thereof. Preferred are semi, highly or perfluorinated, particularly perfluorinated hydrocarbons, e.g. perfluorohydrocarbons of e.g. C3-C30, such as C4-C10. Specific examples of suitable perfluoroalkanes and -cycloalkanes include perfluorohexane, -heptane, -octane and -(methylcyclohexane). Semi fluorinated hydrocarbons relates particularly to semifluorinated n-alkanes, such as perfluoroalkyl-alkane.

"Semi fluorinated" hydrocarbons also include such hydrocarbons wherein blocks of -C-F and -C-H alternate. "Highly fluorinated" means that the majority of the -C-H units are replaced with -C-F units. "Perfluorinated" means that all -C-H units are replaced with -C-F units. See the articles of A. Enders and G. Maas in "Chemie in unserer Zeit", 34. Jahrg. 2000, Nr.6, and of Pierandrea Lo Nostro in "Advances in Colloid and Interface Science, 56 (1995) 245-287, Elsevier Science

The emulsion can be formed by any means known in the art: by mixing, such as by stirring said solution vigorously to said solvent forming the continuous phase or by means of mixing mills, or by means of ultra sonic wave. A further possibility is to use a so called phase change method for preparing the emulsion by first forming a homogeneous system which is then transferred by changing the temperature of the system to a biphasic system so that droplets will be formed. If needed, part of the catalyst forming compounds may be added after the emulsion system is formed.

The two phase state is maintained during the emulsion formation step and the solidification step, as, for example, by appropriate stirring.

The ratio of catalyst component(s) forming solution and the first solvent immiscible therewith is chosen so that the first solution forms the discontinuous phase (droplets) in the bi- or multiphase system.

Additionally, emulsifying agents/emulsion stabilisers can be used, preferably in a manner known in the art, for facilitating the formation and/or stability of the emulsion.

For the said purposes e.g. surfactants, e.g. a class based on hydrocarbons (including polymeric hydrocarbons with a molecular weight e.g. up to 10 000 and optionally interrupted with a heteroatom(s)), preferably halogenated hydrocarbons, such as semi- or highly fluorinated hydrocarbons optionally having a functional group selected e.g. from -OH, -SH, $NH_2$, -COOH, -$COONH_2$, cyclic ethers and/or any reactive derivative of these groups, like alkoxy or carboxylic acid alkyl ester groups, or, preferably semi-, highly- or perfluorinated hydrocarbons having a functionalised terminal, can be used.

Alternatively, an emulsifying and/or emulsion stabilising aid can also be formed by reacting a surfactant precursor bearing at least one functional group with a compound reactive with said functional group and present in the catalyst solution or in the solvent forming the continuous phase. The obtained reaction product acts as the actual emulsifying aid and or stabiliser in the formed emulsion system.

Examples of the surfactant precursors usable for forming said reaction product include e.g. known surfactants which bear at least one functional group selected e.g. from -OH, -SH, $NH_2$, -COOH, -$COONH_2$, cyclic ethers with 3 to 5 ring atoms, and/or any reactive derivative of these groups, like alkoxy or carboxylic acid alkyl ester groups; e.g. semi-, highly or perfluorinated hydrocarbons bearing one or more of said functional groups. Preferably, the surfactant precursor has a terminal functionality as defined above.

These and any further additives, and/or compounds can be added to the system in any stage of the dispersing and/or solidification step, if needed.

In the preparation process of the invention the solution may already contain all the compounds (to be added) before the dispersing step thereof. Alternatively, e.g. depending on the reactivity of the compounds, the dispersed phase can be formed first from one or more of the compounds and, thereafter, the other compound(s) can be added separately to said dispersed phase. Said other compounds can be added in a form of a solution or already in a form of an emulsion. Portion-wise additions of the dispersed phase are also possible.

In one alternative the solution is prepared according to or analogously to the method as described for example in WO 01 55230 by reacting the magnesium hydrocarbyloxy compound of the formula (I) with the aluminium compound of formula (II) and by adding a titanium compound to form a soluble Mg-Al-Ti complex. This Mg-Al-Ti complex is then first added to the inert solvent and the V-compound is added immediately after addition of the Mg-Al-Ti complex. In another alternative a solution of Mg -Al complex is formed first, which is added to the inert solvent first, and immediately after that a V/Ti mixture is added to the system. Still in a further alternative a solution of Mg-Al-complex and V/Ti mixture is added all in one step to the inert solvent.

The solidification of the catalyst component(s) in the dispersed droplets can be effected in various ways, e.g. by causing or accelerating the formation of said solid catalyst forming reaction products of the compounds present in the droplets. This can be effected, depending on the used compounds and/or the desired solidification rate, with or without an external stimulus, such as a temperature change of the system.

In a further embodiment, the solidification reactions of the compounds are started after the formation of the emulsion system. Accordingly, a solution of one or more of the starting compounds of a catalyst component(s) is first dispersed into the inert, immiscible solvent, and thereafter, the other(s) of the starting compounds is added to said first dispersed phase, whereafter the solidification reactions starts therein. Again, heating or cooling can be used during and/or after such additions.

Alternatively the solidification may be effected (or accelerated) by removing the solvent from the droplets or in case of a molten liquid catalyst by cooling the system.

The solidification may also be controlled by the reaction time.

Alternatively, if desired, the emulsion system may be subjected to a very rapid temperature change to cause a fast/immediate solidification in the dispersed system.

The appropriate temperature change, i.e. an increase or a decrease in the temperature of an emulsion system, required for the desired solidification rate of the components cannot be limited to any specific range, but naturally depends on the emulsion system, i.e. on the used compounds and the concentrations/ratios thereof and/or on the used solvents, and is chosen accordingly. It is also evident that any techniques may be used to provide sufficient heating or cooling effect to the dispersed system to cause the desired solidification.

In one embodiment the heat treatment is effected by bringing, e.g. dispersing, such as spraying or preferably siphoning, the emulsion system to an inert receiving medium. The temperature of the receiving system can be significantly higher than that of the emulsion to cause an instant solidification of the reaction product in the droplets. The receiving medium can be gaseous or a liquid, preferably a solvent, and suitably the same as used as the continuous phase in the formation of the emulsion.

The solidified procatalyst particles may be subjected to washing step(s).

The droplet shape of the particles may be substantially maintained. The formed particles may have an average size range of 1 to 500 $\mu$m, e.g. 5 to 500 $\mu$m, advantageously 5 to 200 $\mu$m or 10 to 150 $\mu$m. Even an average size range of 5 to 60 $\mu$m is possible. The size may be chosen depending on the polymerization the catalyst is used for. Advantageously, the particles are essentially spherical in shape; they have a low porosity and a low surface area.

The quantity of vanadium and titanium compound which are employed to prepare the procatalyst is in particular such that the molar ratio of V:Ti is from 99:1 to 1:99, preferably to 10:90, more preferably to 15:85 and most preferably to 20:80.

Again, in the final solid procatalyst particles, the molar ratio of Mg:(V/Ti) can be e.g. between 10:1 to 1:10, preferably less than 6:1, such as between less than 6:1 and 1:1.

The molar ratio of (V/Ti):Al can be e.g. between 10:1 to 1:2, e.g. 5:1 to 1:1. The ratios can be determined in a manner known in the art.

The final procatalyst, e.g. the ZN procatalyst, thus obtained is combined with further catalyst component(s) conventionally used in the art, such as a cocatalyst (e.g. aluminium alkyl compounds) and optionally (internal) electron donors, modifiers and/or additional activators. Said further catalyst component(s) can be combined with the present

procatalyst during the preparation method of the present procatalyst or during the actual polymerization step by adding the procatalyst of the invention and the further component(s) separately into a reactor.

Preferably no internal electron donor is added.

Preferably the solid procatalysts prepared according to Method 1 or Method 2 have an average particles size in the range of 2 to 200 μm, more preferably from 5 to 150 μm and most preferably from 10 to 50 μm.

Cocatalyst

The above described procatalyst, prepared by Method 1 or by Method 2, for the polymerization of $C_2$-$C_{20}$ olefins is combined with a cocatalyst so that it can be used in a polymerization process.

The cocatalyst is an organometallic compound of formula (III)

$$\begin{array}{c}(RO)_z\\ |\\ R_y\text{-}Al\text{-}Cl_x\end{array}$$

wherein each R is independently a $C_1$-$C_{20}$-alkyl group, $0 \leq x \leq 2$; $1 \leq y \leq 3$; $0 \leq z \leq 2$ and $x + y + z = 3$, x, y and z may or may not be an integer;

Examples of suitable cocatalysts are:

Aluminium alkyls (x and z = 0; y = 3) like trimethyl aluminium, triethyl aluminium, triisobutylaluminium, tri-n-octyl aluminium and isoprenyl aluminium. Especially triisobutylaluminium is preferred.

Aluminium alkyl halides ($z = 0$; $0 < x \leq 2$; $1 \leq y < 3$) like diethyl aluminium chloride, ethyl aluminium dichloride, dipropyl aluminium chloride, propyl dibutyl aluminium chloride, butyl aluminium dichloride, methyl aluminium dichloride, dimethyl aluminium chloride

Aluminium alkoxy compounds ($0 < z \leq 2$, $x = 0$; $1 \leq y < 3$) like diethyl aluminium ethoxide, diethyl aluminium propoxide, ethyl aluminium diethoxide, dipropyl aluminium ethoxide, di (iso)butyl aluminium ethoxide, (iso)butyl aluminium diethoxide, methyl aluminium propoxide, dimethyl aluminium ethoxide, or any combinations of alkyl and alkoxy groups.

Alternatively, the cocatalyst may be a mixture of compounds selected from the group consisting of tri-$C_1$-$C_{10}$ alkyl aluminium compounds, where one of the components comprises short-chained alkyl groups (1 - 3 carbon atoms) and the other component comprises long-chained alkyl groups (4 - 20 carbon atoms). Examples of suitable aluminium alkyls comprising short-chained alkyl groups are trimethyl aluminium and in particular, triethyl aluminium. Examples of suitable components comprising long-chained alkyl groups are tri-n-octyl aluminium and in particular isoprenyl aluminium. In particular, the cocatalyst is a mixture of isoprenyl aluminium and triethyl aluminium or isoprenyl aluminium and trimethyl aluminium.

In the $C_2$-$C_{20}$ olefin polymerization catalyst system according to the present invention, the molar ratio between the aluminium in said cocatalyst and the vanadium/titanium of said procatalyst is preferably 1:1 - 100:1, more preferably 2:1 - 50:1 and most preferably 3:1 - 20:1.

The procatalyst and the cocatalyst may be contacted with each other prior to their introduction into the polymerization reactor. However, it is equally well possible to introduce the two catalyst components separately into the reactor.

Polymerization process:

The catalyst systems hereinbefore described are according to the invention employed in multistage polymerization (e.g. polymerization in at least two stages). In such a polymerization the reactors are connected in series such that the products of one reactor are used as the starting material in the next reactor. The polymerization may be carried out continuously or batch wise, preferably the polymerization is carried out continuously.

The polymer product of an early stage (e.g. the first) may be passed on to the subsequent (e.g. second) reactor on a continuous, semi-continuous or batch-wise basis.

The first stage can be carried out in a gas phase or in a slurry phase and is preferably carried out in the slurry phase. Preferably the first stage produces a lower molecular weight component. The second stage can also be carried out in a gas phase or in a slurry phase, but is preferably carried out in the gas phase. Preferably the second stage

produces a higher molecular weight component. In a preferred polymerization process, one slurry phase step and one gas phase step is carried out. In particularly preferred processes, one slurry phase stage is followed by one gas phase stage.

The slurry and gas stages may be carried out using any conventional reactors known in the art. A slurry phase polymerization may, for example, be carried out in a continuously stirred tank reactor; a batch-wise operating stirred tank reactor or a loop reactor. Preferably slurry phase polymerization is carried out in a loop reactor. The term gas phase reactor encompasses any mechanically mixed or fluidized bed reactor. Preferably the gas phase reactor is a fluidized bed reactor.

The reactor system may additionally comprise other reactors, e.g. for pre-polymerization. Pre-polymerization may be used, for example, to provide the catalyst in a solid particulate form or to activate the catalyst. In a typical pre-polymerization, monomer (e.g. ethylene) is polymerized with catalyst, as hereinbefore described, to yield, for example, 0.1 to 1000 g polymer per gram of catalyst. The polymer formed during pre-polymerization forms less than 10 % by weight, preferably less than 7 % by weight, typically less than 5 % by weight of the total weight of the final polymer. Still more preferably only 2-3 % of the total weight of the polymer is formed during any pre-polymerization step. A pre-polymerization is therefore not intended to represent one of the stages of the multistage polymerization process hereinbefore described.

To produce the ethylene polymer according to the method of the present invention, ethylene and preferably at least one other alpha-olefin are polymerized in the presence of a catalyst as hereinbefore described. Representative examples of olefins which may be polymerized with ethylene in either stage include $C_{3-20}$, singly or multiply ethylenically unsaturated, monomers (e.g. $C_{3-10}$ $\alpha$-olefins). Particularly preferred comonomers include propylene, 1-butene, 1-hexene and 4-methylpent-1-ene.

In a preferred method of the invention the polymer produced in the first stage preferably comprises 10 to 90 % by weight, more preferably 30 to 70, still more preferably 40 to 60 % by weight of the total weight of the final polymer.

Preferably this polymer is an ethylene homopolymer. Still more preferably the polymer (e.g. ethylene homopolymer) produced in the first stage is the LMW component.

The polymerization medium typically comprises ethylene, a diluent and catalyst as hereinbefore described. The diluent used will generally be an aliphatic hydrocarbon having a boiling point in the range -70 to +100 °C. Preferred diluents include hydrocarbons such as propane or isobutane. Hydrogen is also preferably fed into the reactor to function as a molecular weight regulator. In a typical slurry phase polymerization the temperature is preferably in the range 40 to 110 °C, preferably 70 to 100°C.

The reaction pressure is typically 10 to 100 bar, preferably 15 to 80 bar.

The weight average molecular weight of preferred ethylene homopolymer (preferably produced in the first slurry phase stage) is in the range 5 000 to 50 000, more preferably 10 000 to 40 000, still more preferably 15 000 to 25 000 as measured by gel permeation chromatography. Preferred ethylene homopolymer may also have a molecular weight distribution of 3 to 15, more preferably 3 to 8, e.g. 3 to 6.

Polymerization in the first reactor (e.g. a loop reactor) is typically carried out for 10 to 300 minutes, preferably 30 to 180 minutes.

At least part of the volatile components of the reaction medium (e.g. hydrogen) may then be removed. The product stream is then subjected to a second polymerization stage.

The second polymerization is preferably carried out using the same catalyst as hereinbefore described in the first stage (i.e. no fresh catalyst is added in the second stage).

In the second polymerization stage the HMW component of the multimodal (e.g. bimodal) polymer is preferably produced. The second stage is preferably carried out in the gas phase. The polymer produced in the second stage is preferably a copolymer. The polymer produced in the second stage preferably comprises 90 to 10 %, preferably 70 to 30 %, more preferably 60 to 40 % by weight of the total copolymer composition (i.e. the LMW:HMW component weight ratio is preferably 10:90 to 90:10, preferably 30:70 to 70:30, more preferably 40:60 to 60:40).

For gas phase reactors, the reaction temperature used will generally be in the range 60 to 115 °C (e.g. 70 to 110 °C), the reactor pressure will generally be in the range 10 to 30 bar, and the residence time will generally be 1 to 8 hours.

The polymerization medium in the second stage typically comprises ethylene, comonomers (e.g. 1-butene, 1-hexene, or octene), nitrogen, propane and optionally hydrogen.

The weight average molecular weight of preferred ethylene copolymer (preferably produced in the second stage) is in the range 100 000 to 900 000, more preferably 200 000 to 800 000, still more preferably 300 000 to 700 000 as measured by gel permeation chromatography. Preferred ethylene copolymer may also have a molecular weight distribution in the range 2,5 to 8, more preferably 3 to 6 still more preferably 3 to 5.

As stated above, the final polymer can have a co-monomer content of up to 38 wt %. More preferably, however, the final polymer has a co-monomer content of up to 25 wt%, still more preferably up to 20 wt%. If the polymer is produced in a two stage process, the amount of comonomer in the polymer produced in the second stage can be calculated based on the final amount present in the polymer, the amount in the polymer produced in the first stage and on the production

split between the first and second stages.

Generally the quantity of catalyst used will depend upon the nature of the catalyst, the reactor types and conditions and the properties desired for the polymer product. The melt flow rate and the density as well as the molecular weight of the resulting ethylene polymers can be controlled independently over wide ranges.

The advantage of using the catalyst system in a multi-stage polymerization according to the invention becomes especially apparent when producing bimodal linear low density ethylene polymers, having a density of from about 900 to 935 kg/$m^3$, preferably from 900 to 930 kg/$m^3$.

With the combination of the improved solid ZN-catalyst and the multi-stage polymerization it is possible to produce polymers where the titanium centre makes lower molecular weight homopolymer (because of higher hydrogen sensitivity and poor comonomer response) and vanadium is taking care of high molecular weight component having high comonomer content (vanadium site can make high molecular weight with very high comonomer response).

The final ethylene polymer composition produced according to the invention preferably has a $MFR_2$ of 0.1 to 10 g/10 min, more preferably 0.5 to 2 g/min, as measured according to ISO 1133 at 190°C under a 2,16 kg load.

A preferred final ethylene polymer composition is also that having a $MFR_{21}$ of 50 to 300 g/10 min as measured according to ISO 1133 at 190°C under a 21.6 kg load.

The melt flow rate (MFR) and the flow rate ratio (FRR) are important properties of the ethylene polymer composition, because MFR and FRR are indications of the flowability and thus processability of the polymer.

The weight average molecular weight of preferred final polymer (e.g. ethylene polymer produced in a two stage polymerization) is in the range 40,000 to 600,000, more preferably 50,000 to 500,000, still more preferably 100,000 to 400,000 as measured by gel permeation chromatography. Preferred final polymer (e.g. ethylene copolymer) may also have a molecular weight distribution of 10 to 50, preferably 15 to 40. The final MWD of the polymer produced by a two stage polymerization process is the result of the MW's produced in each stage.

The ethylene polymer produced by the method of the current invention preferably is a bimodal LLDPE, preferably having a density of 900 to 935 kg/$m^3$, more preferably 900 to 930 kg/$m^3$, still more preferably 915 to 930 kg/$m^3$, e.g. about 920 kg/$m^3$. Preferred ethylene polymer may also have a crystallinity of 5 to 55 %, e.g. 30 to 50 %.

The polymer of the present invention may also comprise conventional additives such as antioxidants, UV stabilisers, acid scavengers, anti-blocking agents, polymer processing agent etc. The amounts of these compounds may be readily determined by those skilled in the art. These may be added to the polymer using conventional techniques.

The polymers produced according to the method of the present invention may be used to manufacture articles such as films and pipes. The polymers may, for example, be used to form a complete film or a layer of a multilayer film. The film may be produced by any conventional technique known in the art, e.g. blowing or casting. Films made using the polymer of the invention exhibit high dart impact strengths and a low number of gels.

Pipes may be made from the polymers produced according to the present invention by any conventional technique, e.g. extrusion. The inclusion of the LMW component in the polymer enhances processability, whilst the narrower MWD of the polymer as a whole (largely due to the avoidance of a low molecular weight tail on the HMW component) ensures that pipes can withstand high pressures.

The invention will now be described in more detail in the following non-limiting examples.

## Experimental and Examples

**1.** Definitions and Measurement Methods

**Melt flow rates (MFR)** are measured under a load of 2.16 and 21.6 kg and at 190 °C according to ISO 1133.

**FRR21/2** is the ratio of $MFR_{21}/MFR_2$

### Molecular weights, molecular weight distribution ( Mn, Mw, MWD) - GPC

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**Density** of the polymer was determined according to ISO 1183-1987 on compression-moulded specimens.

**Xylene Solubles (XS) Content**

2.0 g of polymer is dissolved in 250 ml p-xylene at 135 °C under agitation. After 30 minutes, the solution is allowed to cool for 15 minutes at ambient temperature and then allowed to settle for 30 minutes at 25 °C. The solution is filtered with filter paper into two 100 ml flasks.

The solution from the first 100 ml vessel is evaporated in nitrogen flow and the residue is dried under vacuum at 90 °C until constant weight is reached.

$$XS\% = (100 \times m_1 \times v_0) / (m_0 \times v_1)$$

$m_0$ = initial polymer amount (g)
$m_1$ = weight of residue (g)
$v_0$ = initial volume (ml)
$v_1$ volume of analysed sample ml)

**Comonomer contents** (hexene and butene) were measured with Fourier transform infrared spectroscopy (FTIR) calibrated with $^{13}$C-NMR

The **Melting Temperature ($T_m$) and the Crystallization Temperature ($T_{cr}$)** were measured with Mettler TA820 differential scanning calorimeter (DSC) on 3±0.5 mg samples. Both crystallization and melting curves were obtained during 10°C/min cooling and heating scans between -10 - 200°C. Melting and crystallization temperatures were taken as the peaks of endotherms and exotherms, respectively. The degree of crystallinity was calculated by comparison with heat of fusion of a perfectly crystalline polyethylene, i.e. 290 J/g.

**Crystallinity** was calculated from the melting curve using the equation

$$\Delta H_{sample} / \Delta H_{100\%}$$

$\Delta H_{100\%}$ = 290 J/g was used for 100% crystalline PE.

**Example 1: Catalyst preparation:**

**a) Preparation of the Mg-alcoholate complex**

The Mg-alcoholate was prepared in a larger batch. About 24 kg of the Mg-alcoholate complex was produced. The Mg-alcoholate complex synthesis was started by adding 16,0 kg (472 g Mg, 19,42 mol Mg) of 20 % heptane solution of $(C_4H_9)_{1,5}Mg(C_8H_{17})_{0,5}$ (BOMAG, 2,95 % Mg) into a multi purpose reactor at room temperature. To this solution 4,921 kg (37,79 mol) of 2-ethyl-hexanol (EHA) was added slowly at room temperature. The Mg/EHA molar ratio in this mixture was 1:1,945. The temperature was held at about room temperature and the reactants were allowed to react with each other for 108 min. 3,757 kg (52,1 mol) of n-pentane was added at room temperature to reduce viscosity and the Mg-alcoholate complex was allowed to stabilise for 120 min at 20 - 30 °C. After this the Mg-alcoholate solution was allowed to temperate back to room temperature. Analyses showed that the Mg-alcoholate complex had a concentration of 2,4 % Mg.

**b) Preparation of the $MgCl_2$ support material - Method 1**

25 ml of heptane ($C_7$) was first added to a 250 ml glass reactor. Then 38,2 g of a 20 w% pentane solution of EADC was added. Afterwards a Mg-complex solution, as prepared above, was added drop by drop with a syringe during 45 min into the reaction solution at room temperature in a molar proportion of 1:1 referring to EADC. The Mg/Al molar ratio in this mixture was about 2:1. After this the temperature was adjusted to 75 °C and the reactants were allowed to react with each other. After reaction, the precipitate was allowed to settle for 30 min and then the liquid was siphoned off and the support washed twice with heptane at 60°C. The wash solution was then siphoned off. The support-heptan slurry had a Mg content of 1.06 wt%.

**Catalyst A**

Catalyst A was prepared by taking 10 g of the previously prepared support material into a vessel provided with

a mixing device. In a separate vessel 0,06 ml of $VCl_4$ and 0,18 ml of $TiCl_4$ were mixed and then added in the vessel with the support in heptane. The Mg/(V + Ti) molar ratio was 2:1. The slurry was mixed over night at room temperature. After this the catalyst was separated from the heptane liquid and washed twice with 5 ml portions of heptane and then dried for one hour under a stream of nitrogen.

**Comparative Example 1: Catalyst B:**

The catalyst B was prepared by taking 10 g of the previously prepared support material into a vessel provided with a mixing device. 0,24 ml of $TiCl_4$ was added to the vessel with the support slurry. The Mg/Ti molar ratio was 2:1. The slurry was mixed for four hours at room temperature. After this the catalyst was separated from the heptane liquid and washed twice with 5 ml portions of heptane and then dried for one hour under a stream of nitrogen.

**Comparative Example 2: Catalyst C**

As a comparative example a conventional Ziegler-Natta catalyst, comprising EADC, Mg-complex and $TiCl_4$ impregnated on activated silica, has been used.

This catalyst has been prepared as described in EP 1 378 528, Example 1.

**Example 2: Two-stage polymerization with catalyst A**

**First stage: Homopolymerization of ethylene at high MFR (batch slurry polymerization:**

A 3 litre autoclave reactor was used. 1800 ml of iso-butane was introduced into the reactor as reaction medium. The temperature of the reactor system was set to 90°C and the catalyst (prepared according to the method described above) and the co-catalyst were fed into the reactor by means of two feed vessels that were connected in line to the reactor lid. About 26,3 mg of catalyst A was added into the upper feed vessel together with 10 ml (6.3 g, 87 mmol) of pentane.

TIBA was used as co-catalyst with Al/Ti molar ratio of 10. The co-catalyst was added to the lower feed vessel.

The co-catalyst was added first into the reactor and the catalyst was introduced afterwards by pressurising the upper feed vessel to 7 bar with $N_2$, whereby the over pressure pushed in the catalyst into the reactor. The manoeuvre was done three times. One additional 500 ml vessel was connected in series between the lid of the reactor and the ethylene monomer feed line. 17.5 bar of $H_2$ pressure was added to this feed vessel (390 mmol). These 390 mmol corresponded to a high MFR polymerization.

The polymerization was started by opening the ethylene valve; hydrogen was flushed into reactor with ethylene. A total pressure of 13.7 bar was maintained by the ethylene feed throughout the polymerization. The polymerization was carried out at 90°C until about 100 g of polymer was produced (48 min) after which it was stopped by venting off the monomer and iso-butane. The amount of produced polymer was estimated from the ethylene mass flow meter.

**Second stage: Ethylene - hexene co-polymerization**

The second stage in the polymerisation was carried out in the same 3 l autoclave reactor as described above containing the 100 g of previously prepared homopolymer. 1800 ml (987 g, 17,0 mol) of iso-butane was introduced into the reactor as reaction medium. No additional co-catalyst was fed into the second polymerisation stage. After adding the polymerisation medium the temperature of the reactor system was set to 85 °C. One additional feed vessel was connected in series between the lid of the reactor and the ethylene monomer feed line. 135 ml of 1-hexene co-monomer was introduced into the feed vessel. No $H_2$ was added to the second stage of the polymerisation. The polymerisation was started by opening the monomer feed line and thereby introducing both the co-monomer together with the ethylene monomer. Partial pressure of added ethylene was 7.2 bar. A pressure of about 22.5 bar was maintained by the ethylene feed trough out the test polymerisation. The co-polymerisation was carried out at 85 °C. The co-polymerisation was continued until 100 g of co-polymer was produced (= 8 minutes). The total amount of polymer was thus 100g of homo-polymer plus 100 g of co-polymer. The polymerisation was stopped by venting off the monomer and the iso-butane. The results from these polymerisations are listed in Table 1.

**Example 3: Two-stage polymerization with comparative catalyst B**

The polymerization was performed as described in Example 2, but instead of catalyst A 25,5 mg of comparative catalyst B was used. The results from this polymerisation are listed in Table 1.

**Example 4: Two-stage polymerization with comparative catalyst C**

The polymerization was performed as described in Example 2, but instead of catalyst A 109,6 mg of comparative catalyst C, together with triethylaluminium (TEA) cocatalyst, was used. The Al/Ti ratio was 13. The results from this polymerisation are listed in Table 1.

**Table 1: results of two-stage polymerizations**

| | Example 2 | Example 3 | Example 4 |
|---|---|---|---|
| | Catalysts A | Catalysts B | Catalyst C |
| kgPO/g.cat.hr | 9.4 | 14 | 1.4 |
| kgPO/g.Ti.hr | 136 | 193 | 73 |
| MFR(2.16) | 0.73 | 1.9 | 0.12 |
| MFR(21) | 68 | 182 | 32.49 |
| FRR(21/2) | 92.92 | 94.12 | 270 |
| BD, kg/m3 | no | no | 270 |
| 1-Hex.. Cont., w-% | 13.1 | 14.3 | 2 |
| GPC $M_w$ | 183 000 | 147 000 | 240 000 |
| GPC $M_n$ | 8900 | 6100 | 5000 |
| Mwd | 20.6 | 24.1 | 47.9 |
| Balance Density | 924.2 | 922.3 | 952.8 |
| XS, w-% | 17.9 | 19.6 | 1.6 |
| DSC, mel.temp.peak | 128.8 | 127.2 | 129.8 |
| DSC, crys. % | 43 | 38.8 | 61.6 |
| 1 st.polymerization time | 48 | 30 | 65 |
| 2nd polymerization time | 8 | 7 | 5,5 |
| Al/Ti | 10 | 11 | 13 |
| cat.mg | 26.3 | 25.5 | 109.6 |
| Co-catalysts | TIBA | TIBA | TEA |

From table 1 it can be seen that with catalyst A a copolymer having a narrower MWD, compared to copolymers produced with conventional catalyst C and with comparative catalyst B, without Vanadium, is produced.

## Claims

**1.** Improved method for tailoring the molecular weight distribution and comonomer incorporation of a multimodal ethylene polymer having a lower molecular weight component and a higher molecular weight component comprising in a first stage polymerizing ethylene and optionally at least one further alpha-olefin and in a second stage polymerizing ethylene and at least one further alpha-olefin, wherein at least one stage is carried out in a slurry phase and wherein said first and second stages are carried out in the presence of an improved solid Ziegler-Natta catalyst system, said catalyst system comprising

1) a solid procatalyst formed by contacting at least:

a) a Mg-alcoholate complex of the formula (I):

$Mg(OR_1)_{2-n}(R_1)_n$, wherein each $R_1$ independently represents a $C_1$-$C_{20}$ hydrocarbyl group; $0 \leq n < 2$ and may or may not be an integer; and may or may not be an integer; the sum of (2-n) and n is 2

b) an aluminium compound of the formula (II) $Al(R_2)_mX_{3-m}$, wherein each $R_2$ independently represents an alkyl of up to 6 carbon atoms; each X is independently a halogen; $0 \leq m < 3$ and m and may or may not be an integer

c) a vanadium compound and a titanium compound in portions such as to provide a molar ratio of V:Ti from 99:1 to 1:99 and

d) optionally one or more organic ligand compound(s) which is/are selected from organic compounds comprising a cyclopentadienyl anion backbone,

in order to yield the solid procatalyst and

2) one or more organometallic cocatalyst(s) of the formula (III)

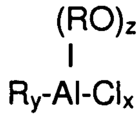

wherein each R is independently a $C_1$-$C_{20}$-alkyl group, $0 \leq x \leq 2$; $1 \leq y \leq 3$; $0 \leq z \leq 2$ and $x + y + z = 3$, x, y and z may or may not be an integer.

**2.** Method according to claim 1, wherein the solid procatalyst is prepared by contacting at least

[A] a solid magnesium aluminium complex containing magnesium, halogen and aluminium, said complex being obtained by

(a1) adding a solution of a magnesium compound of the formula (I):

$Mg(OR_1)_{2-n}(R_1)_n$, wherein each $R_1$ independently represents a $C_1$-$C_{20}$ hydrocarbyl group; $0 \leq n < 2$ and may or may not be an integer; and may or may not be an integer; the sum of (2-n) and n is 2; to a solution of a compound of formula (II): $Al(R_2)_mX_{3-m}$, wherein each $R_2$ independently represents an alkyl of up to 6 carbon atoms; each X is independently a halogen, $0 \leq m < 3$ and m may or may not be an integer,

(a2) separating the solidified reaction product from the reaction mixture and washing the product with a wash solution until a molar ratio of aluminium to magnesium has a value of at least 0.3

[B] with a vanadium compound and a titanium compound in portions such as to provide a molar ratio of V:Ti from 99:1 to 1:99 in order to yield the procatalyst and

[C] optionally adding one or more ligand compound(s) d) which is/are selected from organic compounds comprising a cyclopentadienyl anion backbone at any stage of the preparation.

**3.** Method according to claim 1, wherein the solid procatalyst is prepared by

[A] preparing a common solution of a), b) and c) or separate solutions comprising one or more of compounds a), b) and c)

[B] dispersing said solution(s) in a solvent immiscible therewith and inert in relation to said compounds, to obtain an emulsion in which said solution(s) form(s) the dispersed phase in the form of droplets comprising compounds (a), (b) and (c),

[C] solidifying the catalyst compounds in the dispersed droplets and

[D] optionally adding one or more ligand compound(s) d) which is/are selected from organic compounds comprising a cyclopentadienyl anion backbone at any stage of the preparation into the dispersed phase before or after the solidification step.

**4.** Method according to any of claims 1 to 3, wherein ethylene is polymerized in a two-stage polymerization comprising

a) in a first slurry phase stage, polymerizing ethylene and optionally at least one further alpha-olefin with the improved solid Ziegler-Natta catalyst system according to claim 1 and

b) in a second gas phase stage, polymerizing ethylene and at least one further alpha olefin in the presence of

the same catalyst system.

5. Method according to any of claims 1 to 4, wherein the weight average molecular weight of the ethylene polymer produced in the first slurry phase stage is in the range 5 000 to 50 000 and the comonomer content is from 0 to 8 wt%.

6. Method according to any of claims 1 to 4, wherein the weight average molecular weight of the ethylene copolymer produced in the second phase stage is in the range 100 000 to 900 000 and the comonomer content is from 3-30 wt%.

7. Method according to any of claims 1 to 6, wherein the final multimodal ethylene polymer is a bimodal ethylene polymer having a $MFR_2$ of 0.1 to 10 g/10 min and a $MFR_{21}$ of 50 to 300 g/10 min as measured according to ISO 1133 at 190°C under a 2.16 respectively 21.6 kg load.

8. Method according to any of claims 1 to 7, wherein the weight average molecular weight of the final multimodal ethylene polymer is in the range 40,000 to 600,000, more preferably 50,000 to 500,000, still more preferably 100,000 to 400,000 as measured by gel permeation chromatography, and the molecular weight distribution is between 10 to 50.

9. Method according to any of claims 1 to 8, wherein the final multimodal ethylene polymer is a bimodal LLDPE having a density of 900 to 935 kg/$m^3$ and a crystallinity of 5 to 55 %.

**Patentansprüche**

1. Verbessertes Verfahren zum Anpassen der Molekulargewichtsverteilung und der Einführung von Comonomer bei einem multimodalen Ethylenpolymer mit einer Komponente mit geringerem Molekulargewicht und einer Komponente mit höherem Molekulargewicht,
umfassend in einer ersten Stufe das Polymerisieren von Ethylen und gegebenenfalls zumindest einem weiteren α-Olefin und in einer zweiten Stufe das Polymerisieren von Ethylen und zumindest einem weiteren α-Olefin, wobei zumindest eine Stufe in einer Suspensionsphase durchgeführt wird und wobei die erste und die zweite Stufe in Gegenwart eines verbesserten festen Ziegler-Natta-Katalysatorsystems durchgeführt werden,
wobei das Katalysatorsystem folgendes aufweist:

1) einen festen Prokatalysator, der erzeugt wird, indem zumindest folgendes in Kontakt gebracht wird:

a) ein Mg-alkoholat-Komplex der Formel (I):

$Mg(OR_1)_{2-n}(R_1)_n$, wobei $R_1$ jeweils unabhängig für einen $C_1$-$C_{20}$-Kohlenwasserstoffrest steht; $0 \leq n < 2$ ist und eine ganze Zahl sein kann oder nicht; und eine ganze Zahl sein kann oder nicht; wobei die Summe von (2-n) und n gleich 2 ist;

b) eine Aluminiumverbindung mit der Formel (II):

$Al(R_2)_mX_{3-m}$, wobei $R_2$ jeweils unabhängig für eine Alkylgruppe mit bis zu 6 Kohlenstoffatomen steht; X jeweils unabhängig ein Halogen ist; $0 \leq m < 3$ ist und m und eine ganze Zahl sein kann oder nicht;

c) eine Vanadiumverbindung und eine Titanverbindung in solchen Verhältnissen, daß für ein Molverhältnis V:Ti von 99:1 bis 1:99 gesorgt wird; und
d) wahlfrei eine oder mehrere organische Liganden-Verbindungen, die aus organischen Verbindungen ausgewählt ist bzw. sind, die ein Cyclopentadienylanionen-Grundgerüst aufweisen;

so daß der feste Prokatalysator erhalten wird; und
2) einen oder mehrere organometallische Cokatalysatoren mit der Formel (III)

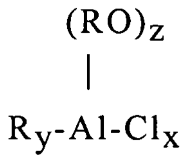

worin R jeweils unabhängig eine $C_1$-$C_{20}$-Alkylgruppe ist, $0 \leq x \leq 2$; $1 \leq y \leq 3$; $0 \leq z \leq 2$ und $x + y + z = 3$ sind, x, y und z eine ganze Zahl sein können oder nicht.

**2.** Verfahren nach Anspruch 1, wobei der feste Prokatalysator hergestellt wird, indem zumindest folgendes in Kontakt gebracht wird:

[A] ein fester Magnesiumaluminium-Komplex, der Magnesium, Halogen und Aluminium enthält, wobei dieser Komplex erhalten wird durch:

(a1) Zugeben einer Lösung einer Magnesiumverbindung der der Formel (I):

$Mg(OR_1)_{2-n}(R_1)_n$, wobei $R_1$ jeweils unabhängig für einen $C_1$-$C_{20}$-Kohlenwasserstoffrest steht; $0 \leq n < 2$ ist und eine ganze Zahl sein kann oder nicht; und eine ganze Zahl sein kann oder nicht; wobei die Summe von (2-n) und n gleich 2 ist;
zu einer Lösung der Verbindung der Formel (II): $Al(R_2)_mX_{3-m}$, wobei $R_2$ jeweils unabhängig für eine Alkylgruppe mit bis zu 6 Kohlenstoffatomen steht; X jeweils unabhängig ein Halogen ist; $0 \leq m < 3$ ist und m und eine ganze Zahl sein kann oder nicht;

(a2) Abtrennen des fest gewordenen Reaktionsproduktes aus dem Reaktionsgemisch und Waschen des Produktes mit einer Waschlösung, bis das Molverhältnis zwischen Aluminium und Magnesium einen Wert von mindestens 0,3 aufweist;

[B] mit einer Vanadiumverbindung und einer Titanverbindung in solchen Verhältnissen, daß für ein Molverhältnis V:Ti von 99:1 bis 1:99 gesorgt wird, so daß der Prokatalysator erhalten wird; und
[C] wahlfreies Zugeben von einer oder mehreren Liganden-Verbindungen d), die aus organischen Verbindungen ausgewählt ist bzw. sind, die ein Cyclopentadienylanionen-Grundgerüst aufweisen, in irgendeiner Stufe der Herstellung.

**3.** Verfahren nach Anspruch 1, wobei der feste Prokatalysator hergestellt wird durch:

[A] Herstellen einer gemeinsamen Lösung von a), b) und c) oder getrennter Lösungen, die eine oder mehrere der Verbindungen a), b) und c) umfassen;
[B] Dispergieren der Lösung(en) in einem Lösungsmittel, das damit nicht mischbar istund gegenüber den Verbindungen inert ist, so daß eine Emulsion erhalten wird, in der die Lösung(en) die dispergierte Phase in Form von Tröpfchen bildet (bilden), die die Verbindungen (a), (b) und (c) umfassen;
[C] Festwerdenlassen der Katalysatorverbindungen in den dispergierten Tröpfchen; und
[D] wahlfreies Zugeben von einer oder mehreren Liganden-Verbindungen d), die aus organischen Verbindungen ausgewählt ist bzw. sind, die ein Cyclopentadienylanionen-Grundgerüst aufweisen, in irgendeiner Stufe der Herstellung in die dispergierte Phase vor oder nach dem Schritt zum Festwerdenlassen.

**4.** Verfahren nach einem der Ansprüche 1 bis 3, wobei Ethylen in einer zweistufigen Polymerisation polymerisiert wird, umfassend:

a) in einer ersten Suspensionsphasenstufe Polymerisieren von Ethylen und gegebenenfalls zumindest einem weiteren $\alpha$-Olefin mit dem verbesserten festen Ziegler-Natta-Katalysatorsystem gemäß Anspruch 1; und
b) in einer zweiten Gasphasenstufe Polymerisieren von Ethylen und zumindest einem weiteren $\alpha$-Olefin in Gegenwart des gleichen Katalysatorsystems.

**5.** Verfahren nach einem der Ansprüche 1 bis 4, wobei das Gewichtsmittel des Molekulargewichts des Ethylenpolymers, das in der ersten Suspensionsphasenstufe erzeugt wird, im Bereich von 5.000 bis 50.000 liegt und der Comonomergehalt 0 bis 8 Gew.-% beträgt.

**6.** Verfahren nach einem der Ansprüche 1 bis 4, wobei das Gewichtsmittel des Molekulargewichts des Ethylenpolymers, das in der Stufe der zweiten Phase erzeugt wird, im Bereich von 100.000 bis 900.000 liegt und der Comonomergehalt 3 bis 30 Gew.-% beträgt.

**7.** Verfahren nach einem der Ansprüche 1 bis 6, wobei das abschlieβende multimodale Ethylenpolymer ein bimodales Ethylenpolymer mit einem $MFR_2$-Wert von 0,1 bis 10 g/10 min und einem $MFR_{21}$-Wert von 50 bis 300 g/10 min ist, und zwar gemäß ISO 1133 bei 190°C unter einer Last von 2,16 bzw. 21,6 kg gemessen.

**8.** Verfahren nach einem der Ansprüche 1 bis 7, wobei das Gewichtsmittel des Molekulargewichts des abschließenden multimodalen Ethylenpolymers im Bereich von 40.000 bis 600.000, stärker bevorzugt von 50.000 bis 500.000, noch stärker bevorzugt von 100.000 bis 400.000 liegt, und zwar durch Gel-Permeationschromatographie gemessen, und die Molekulargewichtsverteilung zwischen 10 und 50 liegt.

**9.** Verfahren nach einem der Ansprüche 1 bis 8, wobei das abschlieβende multimodale Ethylenpolymer ein bimodales LLDPE mit einer Dichte von 900 bis 935 kg/$m^3$ und einer Kristallinität von 5 bis 55 % ist.

## Revendications

**1.** Procédé amélioré pour adapter la distribution de poids moléculaire et l'incorporation de comonomère dans un polymère d'éthylène multimodal comprenant un composant de poids moléculaire plus faible et un composant de poids moléculaire plus élevé, comprenant dans une première étape la polymérisation de l'éthylène et facultativement d'au moins une autre alpha-oléfine et dans une seconde étape la polymérisation de l'éthylène et d'au moins une autre alpha-oléfine, dans lequel au moins une étape est réalisée dans une phase en suspension et dans lequel lesdites première et seconde étapes sont réalisées en présence d'un système catalytique solide amélioré de Ziegler-Natta,
ledit système catalytique comprenant

1) un procatalyseur solide formé en mettant en contact au moins :

a) un complexe Mg-alcoolate de formule (I) :

$Mg(OR_1)_{2-n}(R_1)_n$, dans laquelle chaque $R_1$ représente indépendamment un groupe hydrocarbyle en $C_1$-$C_{20}$ ; $0 \leq n < 2$ et n peut être ou ne pas être un nombre entier ; la somme de (2-n) et de n vaut 2 ;

b) un composé d'aluminium de formule (II) :

$Al(R_2)_mX_{3-n}$ dans laquelle chaque $R_2$ représente indépendamment un groupe alkyle comprenant jusqu'à 6 atomes de carbone ; chaque X est indépendamment un atome d'halogène ; $0 \leq m < 3$ et m peut être ou ne pas être un nombre entier ;

c) un composé de vanadium et un composé de titane en des proportions permettant d'obtenir un rapport molaire de V:Ti de 99:1 à 1:99 ; et
d) facultativement un ou plusieurs composés ligands organiques qui est/sont choisi(s) parmi les composés organiques comprenant un squelette anionique cyclopentadiényle afin d'obtenir le procatalyseur solide ; et

2) un ou plusieurs cocatalyseurs organométalliques de formule (III)

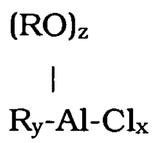

dans laquelle chaque R est indépendamment un groupe alkyle en $C_1$-$C_{20}$, $0 \leq x \leq 2$; $1 \leq y \leq 3$; $0 \leq z \leq 2$ et x +

y + z = 3, x, y et z peuvent être ou ne pas être des nombres entiers.

2. Procédé selon la revendication 1, dans lequel le procatalyseur solide est préparé en mettant en contact au moins

[A] un complexe de magnésium aluminium solide contenant du magnésium, un halogène et de l'aluminium, ledit complexe étant obtenu par

(a1) addition d'une solution d'un composé de magnésium de formule (I) :

$Mg(OR_1)_{2-n}(R_1)_n$, dans laquelle chaque $R_1$ représente indépendamment un groupe hydrocarbyle en $C_1$-$C_{20}$ ; $0 \leq n < 2$ et n peut être ou ne pas être un nombre entier ; la somme de (2-n) et de n vaut 2 ; à une solution d'un composé de formule (II) :$Al(R_2)_mX_{3-n}$ dans laquelle chaque $R_2$ représente indépendamment un groupe alkyle comprenant jusqu'à 6 atomes de carbone ; chaque X est indépendamment un atome d'halogène ; $0 \leq m < 3$ et m peut être ou ne pas être un nombre entier,

(a2) séparation du produit réactionnel solidifié du mélange réactionnel et lavage du produit avec une solution de lavage jusqu'à ce qu'un rapport molaire de l'aluminium au magnésium ait une valeur d'au moins 0,3 ;

[B] avec un composé de vanadium et un composé de titane en des proportions permettant d'obtenir un rapport molaire de V:Ti de 99:1 à 1:99 afin d'obtenir le procatalyseur ; et
[C] en ajoutant facultativement un ou plusieurs composés ligands qui est/sont choisi(s) parmi les composés organiques comprenant un squelette anionique cyclopentadiényle à n'importe quelle étape de la préparation.

3. Procédé selon la revendication 1, dans lequel le procatalyseur solide est préparé

[A] en préparant une solution commune de a), b) et c) ou des solutions séparées comprenant un ou plusieurs des composés a), b) et c) ;
[B] en dispersant ladite ou lesdites solutions dans un solvant non miscible avec celle(s)-ci et inerte vis-à-vis desdits composés, pour obtenir une émulsion dans laquelle ladite ou lesdites solutions forme(nt) la phase dispersée sous la forme de gouttelettes comprenant les composés a), b) et c) ;
[C] en solidifiant les composés catalytiques dans les gouttelettes dispersées ; et
[D] en ajoutant facultativement un ou plusieurs composés ligands qui est/sont choisi(s) parmi les composés organiques comprenant un squelette anionique cyclopentadiényle à n'importe quelle étape de la préparation dans la phase dispersée avant ou après l'étape de solidification.

4. Procédé selon l'une quelconque des revendications 1 à 3, dans lequel l'éthylène est polymérisé dans une polymérisation en deux étapes comprenant

a) dans une première étape en phase en suspension, la polymérisation de l'éthylène et facultativement d'au moins une autre alpha-oléfine avec le système catalytique solide amélioré de Ziegler-Natta selon la revendication 1 ; et
b) dans une seconde étape en phase gazeuse, la polymérisation de l'éthylène et d'au moins une autre alpha-oléfine en présence du même système catalytique.

5. Procédé selon l'une quelconque des revendications 1 à 4, dans lequel le poids moléculaire moyen en poids du polymère d'éthylène produit dans la première étape en phase en suspension est compris dans la plage allant de 5000 à 50 000 et la teneur en comonomère est de 0 à 8 % en poids.

6. Procédé selon l'une quelconque des revendications 1 à 4, dans lequelle poids moléculaire moyen en poids du copolymère d'éthylène produit dans la seconde étape est compris dans la plage allant de 100 000 à 900 000 et la teneur en comonomère est de 3 à 30 % en poids.

7. Procédé selon l'une quelconque des revendications 1 à 6, dans lequel le polymère d'éthylène multimodal final est un polymère d'éthylène bimodal ayant un $MFR_2$ de 0,1 à 10 g/10 minutes et un $MFR_{21}$ de 50 à 300 g/10 minutes comme mesurés conformément à la norme ISO 1133 à 190 °C sous une charge de 2,16 et 21,6 kg respectivement.

8. Procédé selon l'une quelconque des revendications 1 à 7, dans lequel le poids moléculaire moyen en poids du polymère d'éthylène multimodal final est compris dans la plage allant de 40 000 à 600 000, plus préférablement de

50 000 à 500 000, encore plus préférablement de 100 000 à 400 000, comme mesuré par chromatographie sur gel, et la distribution du poids moléculaire est comprise dans la plage allant de 10 à 50.

**9.** Procédé selon l'une quelconque des revendications 1 à 8, dans lequel le polymère d'éthylène multimodal final est un LLDPE bimodal ayant une densité de 900 à 935 $kg/m^3$et une cristallinité de 5 à 55%.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006014475 A
- WO 2007051607 A
- EP 0993478 A
- EP 0991676 A
- WO 2004055068 A
- WO 03106510 A
- WO 0155230 A
- EP 1378528 A


### Non-patent literature cited in the description


- **A. Enders ; G. Maas.** *Chemie in unserer Zeit,* 2000, vol. 34 (6
- **Pierandrea Lo Nostro.** Advances in Colloid and Interface Science. Elsevier Science, 1995, vol. 56, 245-287